# FASCICULE DE BREVET EUROPEEN

(11) **EP 2 791 798 B1**
(45) Date de publication et mention de la délivrance du brevet: **30.09.2020**
(21) Numéro de dépôt: 12801610.2
(22) Date de dépôt: 14.12.2012
(51) Int. Cl.: G06F 9/54

(54) **BUS LOGICIEL**
SOFTWARE BUS
SOFTWARE BUS

(30) Priorité: 16.12.2011 FR 1161746
(43) Date de publication de la demande: 22.10.2014
(73) Titulaire: SAGEMCOM BROADBAND SAS, 92500 Rueil Malmaison (FR)
(72) Inventeur: ROCQUELAY, Antonie, F-92500 Rueil Malmaison (FR); ALARCON, Laurent, F-92500 Rueil Malmaison (FR)
(74) Mandataire: Cabinet Le Guen Maillet
(86) Numéro de dépôt international: PCT/EP2012/075652
(87) Numéro de publication internationale: WO 2013/087894

(56) Documents cités:
- WO-A2-03/007105
- US-A1- 2010 146 168
- US-A1- 2010 269 027
- J.M. Purtillo: "The POLYLITH software bus", ACM Transactions on Programming Languages and Systems, 31 janvier 1994 (1994-01-31), pages 151-174, XP055033844, Extrait de l'Internet: URL:http://delivery.acm.org/10.1145/180000 /174629/p151-purtilo.pdf [extrait le 2012-07-25]
- John Callahan ET AL: "A Software Bus for Thread Objects", , 1994, pages 1-17, XP055033846, Extrait de l'Internet: URL:http://citeseerx.ist.psu.edu/viewdoc/d ownload;jsessionid=61EAF84A8D37E6AFB034FA8 F50AAD363?doi=10.1.1.57.3716&rep=rep1&type =pdf [extrait le 2012-07-25]
- BOMING ZHANG ET AL: "A supporting platform for new generation of EMS based on PC cluster", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 juillet 2008 (2008-07-20), pages 1-8, XP031304255, ISBN: 978-1-4244-1905-0

## Description

La présente invention concerne le domaine des procédés de communication entre modules logiciels et plus particulièrement des bus logiciels.

Les dispositifs de traitement de l'information fonctionnent sous le contrôle d'un système d'exploitation. Ces systèmes d'exploitation sont multitâches et permettent d'ordonnancer une pluralité de modules logiciels. Ces modules logiciels peuvent être de plusieurs types en fonction de l'ordonnanceur (*scheduler* en anglais) qui organise le multitâche et des possibilités d'une hiérarchie de modules.

Historiquement, les systèmes d'exploitation ont permis d'ordonnancer des processus. Un processus se définit comme un module logiciel disposant de son propre contrôle et de son propre espace mémoire. L'ordonnancement des processus est effectué typiquement aujourd'hui de manière préemptive. C'est-à-dire que l'ordonnanceur décide de manière arbitraire des moments de basculement de contexte entre les processus. Le contexte du processus courant, typiquement le contenu de caches mémoires, le contenu des registres du processeur et le pointeur d'instruction du contrôle, est alors sauvegardé. Un autre processus en attente est sélectionné, son contexte est restauré. Il peut alors continuer son exécution.

Le basculement de contexte est un processus relativement lourd. Le besoin d'animer en parallèle des modules logiciels plus légers est apparu. On a donc créé la notion de processus légers (*thread* en anglais). Typiquement, un ensemble de processus légers est ordonnancé au sein d'un espace mémoire commun, il s'agit généralement d'un processus.

Dans certains cas, on peut implémenter un niveau supplémentaire et ordonnancer un ensemble de tâches au sein même d'un processus léger. L'ordonnancement peut alors être préemptif ou non. L'autre famille d'ordonnancement, l'ordonnancement coopératif se faisant à l'occasion d'appels systèmes explicites où la tâche passe le contrôle explicitement à l'ordonnanceur. La différence principale tient au fait que, dans un tel ordonnancement, une tâche entrant dans une boucle infinie peut interdire au système de reprendre la main et bloquer le système complet. L'avantage étant que, une tâche ne pouvant se trouver interrompue à tout moment, il n'est pas nécessaire de protéger les ressources partagées par des mécanismes d'exclusion mutuelle (*mutex* en anglais).

Nous considérons donc le logiciel exécuté sur un dispositif de traitement de l'information comme un ou plusieurs processus, chaque processus pouvant être lui-même constitué d'un ou plusieurs processus légers, chaque processus léger pouvant être constitué d'une ou plusieurs tâches. L'ordonnancement des processus et des processus légers sera considéré comme préemptif, celui des tâches pouvant être préemptif ou non. Nous utilisons le terme de module logiciel pour désigner l'ensemble de ces processus, processus légers et tâches de manière générique.

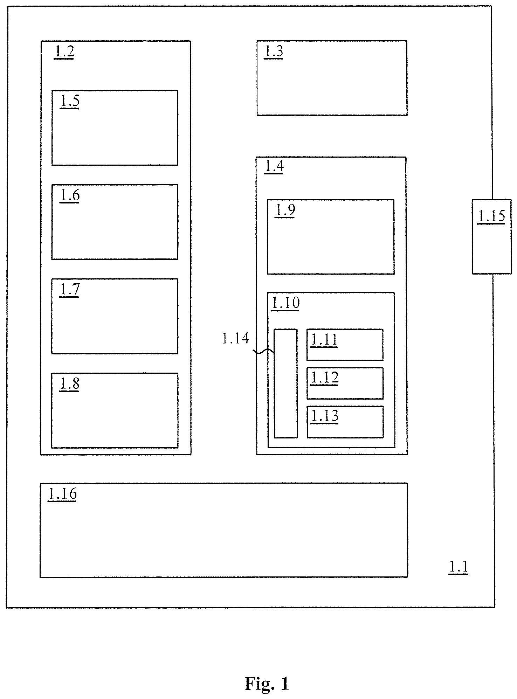

Cette hiérarchie de modules logiciels est illustrée par la Fig. 1. On y voit un dispositif de traitement de l'information 1.1. Ce dispositif permet l'exécution en parallèle de trois processus 1.2, 1.3 et 1.4. Ces processus sont ordonnancés par le système d'exploitation 1.16. Le processus 1.2 contient plusieurs processus légers 1.5, 1.6, 1.7 et 1.8 exécutés en parallèle ordonnancés par le système d'exploitation 1.16. Le processus 1.3 ne contient pas de processus légers. Le processus 1.4 contient un premier processus léger 1.9 et un second processus léger 1.10. Ce second processus léger 1.10 contient lui-même plusieurs tâches 1.11, 1.12 et 1.13 exécutées en parallèle sous le contrôle d'un ordonnanceur 1.14 lui même exécuté au sein du processus léger 1.10. Le dispositif dispose au moins d'un port de communication 1.15 permettant la communication avec d'autres dispositifs via un réseau de communication, typiquement un réseau IP.

Lorsque l'on cherche à faire communiquer des modules logiciels, on trouve dans l'art antérieur des solutions dédiées à un niveau de parallélisme donné. Les technologies principales étant dédiées à la communication entre processus. On peut citer les files d'attente de messages (*message queue* en anglais), les *sockets UNIX* pour une communication entre processus d'un même dispositif, les *sockets INET* pour la communication entre processus situés sur des dispositifs distants connectés à un réseau de type *IP* (*Internet Protocol* en anglais). Il existe aussi les tubes (*pipe* en anglais) nommés ou non. Il existe des bus logiciels, tels que le D-Bus qui est un système de communication entre processus. Il n'est pas adapté pour des modules logiciels tels que les simples tâches, ni pour les processus légers ni pour la communication entre machines.

Le document "The POLYLITH software bus" par J.M. Purtillo (ACM Transactions on Programming Languages and Systems, 31 janvier 1994, pages 151-174) décrit un système permettant d'interconnecter des composants logiciels de languages différents s'exécutant sur une architecture distribuée via un bus logiciel introduit entre les composants du système. Ce bus logiciel définit une interface abstraite générique et assure la distribution de messages entre les composants logiciels.

L'invention vise à proposer un système de communication ou bus logiciel qui permette la communication entre modules logiciels. Cette communication intervient au sein d'une machine et entre machines et fonctionne indifféremment pour le module logiciel qu'il s'agisse d'un processus, d'un processus léger ou d'une simple tâche. La communication repose sur des mécanismes adaptés au niveau de multitâche auquel fonctionnent les modules logiciels émetteurs et récepteurs. Il est basé sur une architecture hiérarchique, des phases de découvertes et d'enregistrement des différents modules logiciels devant communiquer auprès du bus.

La présente invention propose un procédé tel que défini par les revendications annexées, ledit procédé concernant l'échange de messages entre tâches clientes d'un même bus logiciel exécutées par au moins un dispositif de traitement d'information.

Dans un mode particulier de réalisation, ledit dispositif de traitement d'information comporte :
- un système d'exploitation;
- au moins un processus ordonnancé par ledit système d'exploitation, et
- des processus légers pouvant être ordonnancés au sein desdits processus par ledit système d'exploitation. Il est caractérisé en ce qu'il comporte en outre :
- au sein de chaque processus léger, au moins une tâche utilisateur ou une tâche système,
- chaque processus léger contenant lui-même une FIFO pour chaque tâche que ledit processus léger contient ainsi qu'un module de gestion de bus de type processus léger intégrant lui-même un ordonnanceur propriétaire pour l'ordonnancement de la ou les tâches dudit processus léger,
   et en ce que pour qu'une première tâche puisse transmette un message à une seconde tâche, il comporte
   - des moyens pour rechercher le processus dont ladite seconde tâche dépend et
   - des moyens pour, si ladite seconde tâche appartient au même processus que ladite première tâche, poster ledit message dans la FIFO dédiée à ladite seconde tâche afin que celle-ci puisse le prendre en compte,
   - des moyens pour, si la seconde tâche appartient à un autre processus que le processus dont dépend ladite première tâche,
   - créer une tâche relais distante au sein d'un processus léger dudit processus dont dépend la seconde tâche,
   - créer une tâche relais au sein d'un processus léger dudit processus dont dépend la première tâche,
   - créer une connexion entre le processus dont dépend la première tâche et le processus dont dépend la seconde tâche,
   - poster ledit message dans la FIFO dédiée à ladite tâche relais,
   - le transmettre à la tâche relais distante via ladite connexion,
   - le poster dans la FIFO de la seconde tâche afin qu'elle puisse le prendre en compte.

Avantageusement, les moyens pour recherche le processus dont ladite seconde tâche dépend sont constitués de modules de gestion de bus associés à chaque processus, chacun desdits modules de gestion de bus comportant une table de routage répertoriant les tâches et les processus légers dudit processus dont elles dépendent.

Avantageusement, les moyens pour transmettre un message entre ladite tâche relais et ladite tâche relais distante sont constitués, pour chaque processus, en un module de communication interprocessus hébergé par un processus léger dudit processus.

Avantageusement, ledit dispositif de traitement d'information comporte des moyens pour initialiser un desdits processus en tant que processus maître et les autres processus en tant que processus esclaves. Le processus maître comporte un module de communication inter-dispositif hébergé par un processus léger dudit processus de manière à pouvoir transmettre un message entre une tâche relais dudit dispositif et une tâche relais distante hébergée sur un autre dispositif de traitement d'information.

Dans un mode particulier de réalisation, l'invention concerne également un procédé d'échange de messages entre tâches se déroulant sur un ou deux dispositifs de traitement d'information tel qu'il vient d'être décrit. Ledit procédé est caractérisé en ce que pour transmette un message d'une première tâche à seconde tâche, il comporte
- les étapes suivantes mises en œuvre par le module de gestion de bus du processus léger hébergeant ladite première tâche:
   - lorsque ladite seconde tâche appartient au même processus que ladite première tâche, une étape de postage dudit message dans la FIFO dédiée à ladite seconde tâche afin que celle-ci puisse le prendre en compte, sinon
   - une étape de transmission audit module de gestion de bus du processus maître d'un message de recherche de la seconde tâche,
- les étapes suivantes mises en œuvre par le module de gestion de bus du processus maître:
   - lorsque ladite seconde tâche est hébergée par un processus léger dudit processus maître,
      - une étape de création d'une tâche relais distante au sein d'un processus léger dudit processus maître,
      - une étape de transmission d'une réponse audit module de gestion de bus du processus léger hébergeant la première tâche,
   - sinon,
      - une étape de diffusion à chacun desdits modules de gestion de bus de type processus un message de recherche de la seconde tâche,
- les étapes suivantes mises en œuvre par le module de gestion de bus d'un processus esclave hébergeant la seconde tâche, à réception d'un message de recherche de la seconde tâche,
   - une étape de création d'une tâche relais distante au sein d'un processus léger dudit processus esclave,
   - une étape de transmission d'une réponse audit module de gestion de bus du processus maître,
- l'étape mise en outre en œuvre par le module de gestion de bus du processus maître, suite à la réception de la réponse transmise par le module de gestion de bus du processus esclave, de transmission d'une réponse audit module de gestion de bus du processus léger hébergeant la première tâche, et
- les étapes suivantes mises en œuvre par le module de gestion de bus du processus léger hébergeant ladite première tâche, lorsqu'il a reçu une réponse dudit module de gestion de bus du processus maître :
   - une étape de création d'une tâche relais correspondant à ladite tâche relais distante au sein d'un processus léger dudit processus hébergeant ladite première tâche, et
   - une étape de postage dudit message dans la FIFO dédiée à ladite tâche relais, laquelle le transmettra à la tâche relais distante, puis à la seconde tâche.

Selon une autre caractéristique avantageuse de l'invention, ledit procédé comporte les étapes suivantes d'initialisation dudit bus :
- une étape où les modules de gestion du bus des processus esclaves établissent un lien de connexion avec le module de gestion du bus du processus maître ;
- une étape où chaque tâche cliente du bus s'enregistre auprès du module de gestion du bus dont il dépend ;
- une étape de création d'une FIFO associée à chaque tâche cliente du bus et à chaque module de gestion du bus ;
- une étape où le module de gestion du bus d'un processus esclave qui reçoit des enregistrements de modules logiciels clients du bus exporte ces enregistrements vers le module de gestion du bus du processus maître.

Selon une autre caractéristique avantageuse de l'invention, lesdites étapes d'initialisation comportent en outre une étape de création au sein du processus maître d'autant de tâches relais qu'il y a de tâches clientes du bus au sein de processus esclaves dans le dispositif.

Selon une autre caractéristique avantageuse de l'invention, les tâches clientes du bus s'enregistrant avec un mode public ou privé, seules les tâches publiques sont exportées vers le processus maître.

Selon une autre caractéristique avantageuse de l'invention, ledit procédé comporte en outre une étape de découverte entre machines participant au bus. Ladite étape de découverte entre machines participant au bus comprend par exemple :
- une étape d'annonce où chaque machine participant au bus émet une annonce sur le réseau de communication reliant lesdites machines ;
- une étape de réception d'un message d'annonce en provenance d'une machine distante ;
- une étape d'ajout de la machine à l'origine du message d'annonce reçu dans une table si elle n'est pas déjà connue ;
- une étape d'établissement d'une connexion avec cette machine distante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre les différents types de modules logiciels pouvant s'exécuter sur une machine.
La Fig. 2 illustre l'architecture logicielle du bus dans un mode de réalisation de l'invention.
La Fig. 3 illustre la phase d'initialisation du bus au sein d'une machine.
La Fig. 4 illustre la phase de découverte entre machines participant au bus.
La Fig. 5 illustre l'échange de messages entre deux modules logiciels clients du bus qui dépendent d'un même module de gestion du bus.
La Fig. 6 illustre l'échange de messages entre deux modules logiciels clients du bus qui ne dépendent pas d'un même module de gestion du bus, mais sont hébergés au sein d'un même processus.
La Fig. 7 illustre l'échange de messages entre deux modules logiciels clients du bus hébergés sur des processus différents, voire des machines différentes,
La Fig. 8 illustre l'architecture d'un dispositif de traitement de l'information selon un mode particulier de mise en œuvre et,
La Fig. 9 est un diagramme montrant les différentes étapes d'un procédé selon l'invention.

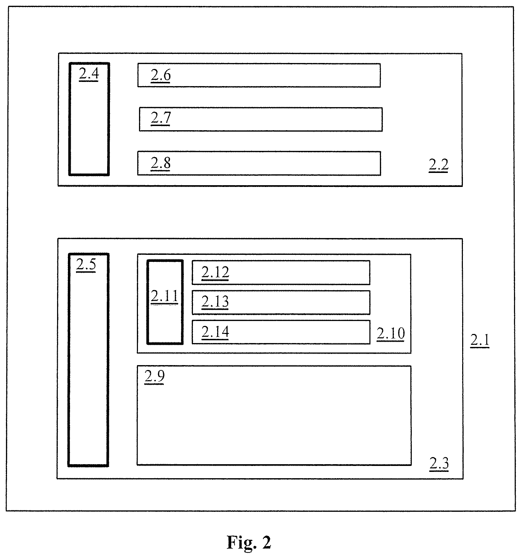

La Fig. 2 illustre l'architecture logicielle du bus dans un mode de réalisation de l'invention. L'invention repose sur deux architectures de processus possibles au sein d'un dispositif de traitement de l'information 2.1. Le processus 2.2 illustre la première architecture possible. Dans cette architecture, un premier module logiciel de gestion du bus 2.4 permet à un ou plusieurs modules logiciels 2.6, 2.7 et 2.8 de communiquer avec le bus. Ces modules logiciels destinés à communiquer avec le bus sont appelés des modules client du bus. Ces modules logiciels sont typiquement des processus légers ordonnancés en parallèle au sein du processus. Le module de gestion du bus 2.4 est également typiquement un processus léger. Ces processus légers sont alors ordonnancés par le système d'exploitation au sein du processus. Cet ordonnancement est typiquement préemptif. Alternativement, un ordonnanceur *ad hoc* au sein du processus peut ordonnancer ces modules logiciels qui sont alors qualifiés de tâches exécutées en parallèle au sein du processus. Leur ordonnancement peut alors être préemptif ou non. L'ordonnanceur *ad hoc* peut être confondu avec le module de gestion du bus 2.4 ou un module indépendant non représenté selon les modes de réalisation.

Dans le processus 2.3, on retrouve un processus léger 2.5 destiné à la gestion du bus pour le processus. Le processus léger 2.9 est un processus client du bus. Au contraire, le processus léger 2.10 n'est pas un client direct du bus. Il héberge un module de gestion de bus 2.11 interne au processus léger et une ou plusieurs tâches 2.12, 2.13 et 2.14. Ce sont alors ces tâches qui sont les clients du bus. Ces tâches sont ordonnancées au sein du processus léger 2.10 par un ordonnanceur *ad hoc* qui peut se confondre avec le module de gestion du but 2.11 ou pas.

Le logiciel est donc divisé en processus 2.2, 2.3. Chaque processus contient un module de gestion du bus 2.4, 2.5. Il héberge également un ou plusieurs modules logiciels clients du bus 2.6, 2.7, 2.8 et 2.9. Ces clients du bus peuvent être des processus légers ou des tâches exécutées directement au sein du processus. Ces clients peuvent comprendre également des tâches 2.12, 2.13 et 2.14 exécutées au sein d'un processus léger. Le processus léger héberge alors également un module de gestion du bus 2.11.

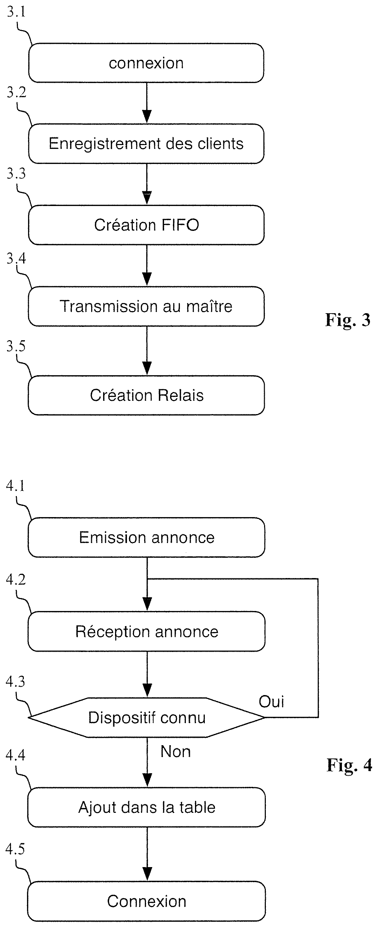

La phase d'initialisation du bus au sein d'une machine se passe de la façon suivante illustrée par la Fig. 3. Les modules logiciels clients devant communiquer avec le bus sont répartis au sein d'un ou plusieurs processus. L'un de ces processus est élu processus maître. Les autres processus, s'il y en a, sont donc des processus esclaves.

Lors d'une étape 3.1, les modules de gestion du bus des processus esclaves établissent un lien de connexion avec le module de gestion du bus du processus maître. Typiquement, ce lien de connexion est une *socket UNIX.*

Lors d'une étape 3.2, chaque module logiciel client du bus s'enregistre auprès de celui-ci. Cet enregistrement a lieu auprès du module de gestion du bus du processus, ou du processus léger, dont dépend le module logiciel client. Avantageusement cet enregistrement comprend le nom du module logiciel, une référence sur le module de gestion du bus dont dépend ledit module logiciel client ainsi qu'un mode de visibilité. Le mode de visibilité comprend un mode privé dans lequel le module logiciel client du bus peut émettre un message vers d'autres clients publics et recevoir une réponse liée à celui-ci sur le bus, mais pas recevoir de messages directs des autres clients publics. Il comprend également un mode public dans lequel le module logiciel client du bus rend public son nom et son emplacement et peut donc recevoir des messages en sus d'en émettre.

Lors de l'étape 3.3, pour chaque module logiciel client du bus qui s'enregistre, le module de gestion du bus crée une FIFO (*First In First Out* en anglais) utilisée dans le cas d'un échange sur le même module de gestion du bus. Ces FIFO peuvent être des FIFO simples, c'est-à-dire non protégées par une exclusion mutuelle, si le séquencement du module de gestion du bus et des clients du bus sous sa responsabilité est coopératif. Dans le cas contraire, on utilise des FIFO protégées par un mécanisme d'exclusion mutuelle. Chaque module de gestion du bus possède une FIFO utilisée dans le cas d'échanges avec un module de gestion du bus différent pour gérer les réceptions de messages liés à ce module client.

Lors d'une étape 3.4, le module de gestion du bus d'un processus esclave qui reçoit des enregistrements de modules logiciels clients du bus exporte ces enregistrements vers le module de gestion du bus du processus maître. Ce module de gestion du bus maintient une table, dite table de routage des utilisateurs, des modules logiciels clients du bus présents sur la machine. Les utilisateurs étant ici les modules clients du bus. Avantageusement, seuls les modules qui se sont déclarés publics sont présents dans cette table.

Lors d'une étape 3.5, le module de gestion du bus du processus maître initie au sein du processus maître autant de modules logiciels qu'il y a de modules logiciels clients du bus au sein du processus esclave dans le dispositif. Ces modules logiciels sont gérés par le module de gestion du bus du processus maître et sont appelés modules logiciels relais (*proxy* en anglais). Cette étape est optionnelle. Les processus relais peuvent être alternativement créés au besoin lors des échanges de messages comme cela sera décrit plus loin.

Cette phase d'initiation du bus au sein du dispositif constitue donc une phase de découverte interne où les différents processus au sein du dispositif établissent une communication avec le processus élu comme maître et où chaque module logiciel client du bus au sein du dispositif est découvert par le module de gestion du bus du processus maître qui maintient une table de tous les clients du bus au sein du dispositif.

L'initialisation du bus comprend avantageusement en outre une étape de découverte entre machines participant au bus. Cette étape est illustrée par l'organigramme de la Fig. 4. Elle est mise en œuvre pour chaque dispositif par les modules de gestion du bus des processus maîtres.

Lors d'une étape d'annonce 4.1, chaque dispositif émet une annonce sur le réseau de communication reliant les dispositifs. Avantageusement, cette émission est effectuée sur les liens LAN en mode de diffusion générale (*broadcast* en anglais) sur le sous-réseau de celui-ci et sur les liens WAN en mode de diffusion multipoint (*multicast* en anglais) sur un groupe particulier. Avantageusement cette émission est répétée dans le temps pour permettre à de nouvelles machines se connectant au bus de découvrir les machines existantes. Le message d'annonce contient avantageusement le nom de la machine ainsi que son adresse IP et un port pour permettre une connexion IP.

Lors d'une étape 4.2, le dispositif reçoit un message d'annonce en provenance d'un dispositif distant.

Lors d'une étape 4.3, le dispositif vérifie alors si le dispositif distant dont il a reçu l'annonce est connu. Avantageusement, il maintient une table des machines connues, il lui suffit donc de vérifier dans cette table si une entrée existe pour ce dispositif distant.

Si le dispositif est déjà connu, il n'y a rien à faire, on boucle en attente de la réception d'un autre message d'annonce.

Si le dispositif n'est pas connu, on l'ajoute dans la table lors d'une étape 4.4. On crée une entrée dans la table des machines connues que l'on renseigne avec le nom du dispositif distant, son adresse IP et le port sur lequel il peut être joint.

Lors d'une étape 4.5, on établit une connexion avec ce dispositif distant. Cette connexion peut prendre la forme d'une *socket INET* dédiée à la communication entre machines. Avantageusement, on crée deux *sockets INET,* l'une utilisant le protocole TCP (*Transmission Control Protocol* en anglais) dédié aux échanges de messages et une autre utilisant le protocole UDP (*User Datagram Protocol* en anglais) dédié à des messages de signalisation comme le message d'annonce.

A l'issue de cette phase de découverte inter machine, les modules de gestion du bus de chaque processus maître de chaque machine connectée au bus sont tous interconnectés. Au niveau de chaque machine, toutes les machines distantes sont connues et référencées. Un lien de communication est établi vers chacune de ces machines distantes.

L'échange de messages entre deux modules logiciels clients du bus utilise la même interface de programmation, API (*Application Programmation Interface* en anglais) d'accès au bus quel que soit le type de module logiciel.

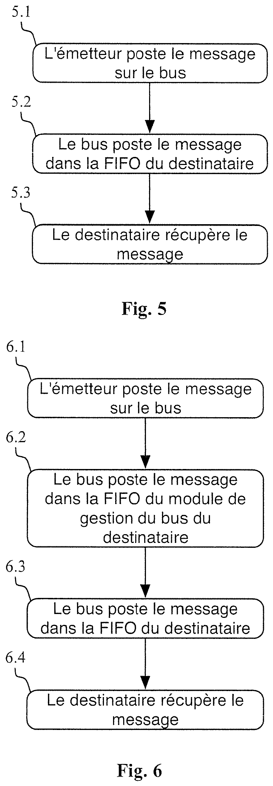

L'échange de messages entre deux modules logiciels clients du bus qui dépendent d'un même module de gestion du bus est illustré par la Fig. 5. Dans ce cas, les deux clients sont typiquement des tâches au sein d'un même processus léger.

Lors d'une étape 5.1, l'émetteur poste son message via l'API du bus en spécifiant le nom du destinataire.

Lors de l'étape 5.2, le module de gestion du bus s'aperçoit que le destinataire fait partie de son périmètre, par exemple en comparant la référence du module de gestion du bus du destinataire au sien, poste le message dans la FIFO simple de celui-ci.

Lors d'une étape 5.3, le destinataire récupère le ou les messages qui lui sont destinés par une opération d'extraction de la FIFO simple.

L'échange de messages entre deux modules logiciels clients du bus qui ne dépendent pas d'un même module de gestion du bus, mais sont hébergés au sein d'un même processus est illustré par la Fig. 6.

Lors d'une étape 6.1, l'émetteur poste son message via l'API du bus en spécifiant le nom du destinataire.

Lors de l'étape 6.2, le module de gestion du bus s'aperçoit que le destinataire ne fait pas partie de son périmètre, par exemple en comparant la référence du module de gestion du bus du destinataire et le sien, poste le message dans la FIFO du module de gestion du bus du destinataire.

Lors d'une étape 6.3, le module de gestion du bus du destinataire extrait le ou les messages présents dans sa FIFO, les postent dans la FIFO du destinataire desdits messages.

Lors d'une étape 6.4, le destinataire récupère le ou les messages qui lui sont destinés par une opération d'extraction de la FIFO.

Concernant la transmission d'un message entre un émetteur et un récepteur constitués par des modules logiciels clients du bus qui se trouvent sur des processus différents, la transmission utilise des modules logiciels relais. Le bus dispose alors de moyens pour initialiser au sein de chaque processus un module logiciel client du bus géré par le bus et qui sert de relais du module logiciel distant. Ainsi, un module logiciel relais du destinataire est créé au sein du processus de l'émetteur, tandis qu'un module logiciel relais de l'émetteur est créé au sein du processus du destinataire. Ces modules logiciels relais sont gérés par le bus. Ainsi, vu de l'émetteur ou du destinataire, la communication apparaît comme étant toujours interne au processus. Les mêmes primitives peuvent être employées par les modules logiciels clients du bus. C'est le bus qui gère la communication inter processus via ces modules logiciels relais. Ces modules logiciels relais permettent également un fonctionnement asynchrone des communications. En effet, l'émetteur poste son message auprès du module logiciel relais du destinataire et peut continuer son traitement. Pendant ce temps-là, le bus achemine le message vers le destinataire réel au moyen d'une connexion inter processus, typiquement une *socket UNIX.*

Concernant cette communication entre processus, on a vu qu'à l'initialisation du bus, un lien de communication est établi entre les processus esclaves et le processus maître. Par contre, il n'y a pas de lien créé entre les processus esclaves entre eux. Par conséquent, au besoin, c'est-à-dire lorsque l'émetteur et le destinataire sont hébergés par deux processus esclaves, un lien est créé, typiquement une *socket UNIX,* entre les deux processus esclaves.

Le processus de transmission entre un émetteur et un destinataire hébergés sur des machines différentes s'effectue exactement sur le même schéma. Il implique également un module relais de l'émetteur au sein du processus du destinataire et un module relais du destinataire au sein du processus de l'émetteur. Une phase de routage gérée par les modules de gestion du bus des processus maîtres des deux machines permet la création d'une connexion directe entre les deux processus. La connexion est ici typiquement une *socket INET.*

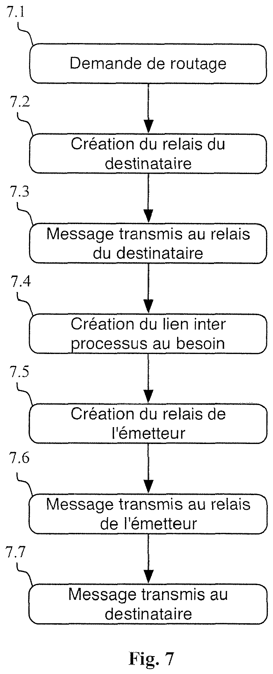

La communication est alors effectuée telle qu'illustrée par la Fig. 7.

Lors d'une première étape 7.1, le module logiciel client du bus qui souhaite émettre un message que l'on appelle l'émetteur effectue une étape de routage avec le nom du destinataire auprès du bus, c'est-à-dire auprès du module de gestion du bus dont il dépend.

Lors d'une étape 7.2, comme le bus s'aperçoit que le destinataire n'est pas hébergé par le même processus, il crée le module logiciel relais de ce destinataire au sein du processus de l'émetteur. Dans certains modes de réalisation, ce module relais peut être préexistant, par exemple au sein du processus maître si l'on a créé les relais lors de la phase d'initialisation, voir l'étape optionnelle 3.5.

Lors de l'étape 7.3, le message est alors transmis à ce module logiciel relais selon le mécanisme décrit pour une transmission de messages au sein du processus. Si la communication est asynchrone, l'émetteur peut alors reprendre son traitement.

Lors de l'étape 7.4, le bus va créer, au besoin, le lien de connexion direct avec le processus hébergeant le destinataire. Plusieurs cas se présentent ici. Si la communication a lieu au sein d'une même machine, entre un processus esclave et le processus maître, le lien de communication existe déjà. La création est inutile. Si la communication a lieu au sein d'une même machine, entre deux processus esclaves, le lien de communication doit être créé entre les deux processus esclaves, typiquement sous la forme d'une *socket UNIX.* Si la communication a lieu entre deux machines différentes, le lien direct doit être créé entre les deux processus, typiquement sous la forme d'une *socket INET.* Cette création est négociée par les processus maîtres des deux machines qui échangent les adresses et ports nécessaires.

Lors de l'étape 7.5, le bus crée au sein du processus hébergeant le destinataire, un module logiciel relais de l'émetteur.

Lors de l'étape 7.6, le message est alors transmis entre les deux relais via le lien de communication direct établi entre les deux processus.

Une dernière étape 7.7 consiste alors à transmettre le message via les mécanismes inter processus déjà décrits au destinataire final.

Avantageusement, le nommage des modules logiciels clients du bus intervient selon un schéma dérivé du schéma utilisé pour les URL (*Uniform Ressources Locator* en anglais). Selon ce schéma, le nom d'un module se décompose de la manière suivante : « ism://nom_machine/nom_module_logiciel » où ism est le nom donné au protocole du bus selon l'invention. Au sein d'une même machine, un nommage relatif réduit au « nom_module_logiciel » peut être utilisé.

Avantageusement, les différentes recopies des messages dans les FIFOs au sein d'un même processus sont évitées. Le message étant copié une fois dans un espace mémoire commun, seule une référence sur ce message est ensuite échangée. Cela permet de limiter les recopies effectives.

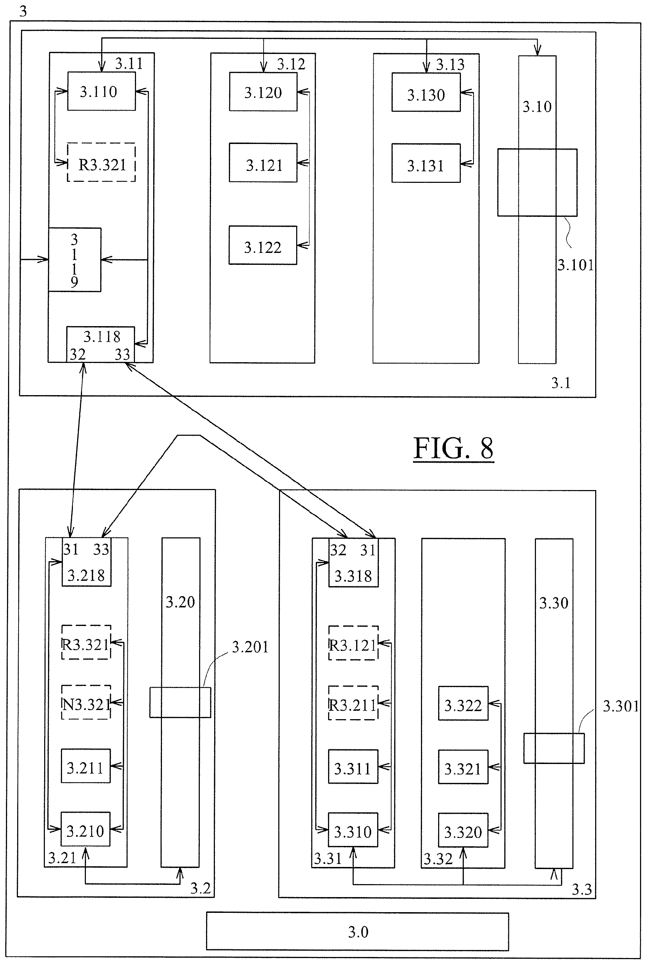

On a représenté à la Fig. 8, un exemple de configuration d'un dispositif de traitement d'information 3, à un instant donné, ayant des particularités par rapport aux dispositifs de traitement d'information représentés aux Figs. 1 et 2 de la présente description, particularités qui ressortiront à la lecture de la suite de la présente description.

Comme on peut le constater, au moment considéré, ce dispositif de traitement d'information 3 permet l'exécution en parallèle de trois processus 3.1, 3.2 et 3.3. Ces trois processus sont ordonnancés par un système d'exploitation 3.0 du dispositif de traitement d'information 3.

Le processus 3.1 contient lui-même plusieurs processus légers 3.11, 3.12 et 3.13 qui sont exécutés en parallèle en étant ordonnancés par le système d'exploitation 3.0. Il contient également un module de gestion du bus de type processus 3.10.

Le processus léger 3.11 contient des tâches système, à savoir un module de communication de type interprocessus 3.118 permettant l'échange de messages entre processus (comme cela sera explicité ci-dessous) ainsi qu'un module communication de type inter-dispositif 3.119 permettant l'échange de messages entre différents dispositifs de traitement d'information. Le processus léger 3.12 contient deux tâches utilisateur 3.121 et 3.122 ainsi qu'un module de gestion du bus de type processus léger 3.120 incluant l'ordonnanceur propriétaire (non représenté) de toutes les tâches du seul processus léger 3.12, en l'occurrence les deux tâches 3.121 et 3.122. Le processus léger 3.13 contient une tâche utilisateur 3.131 ainsi qu'un module de gestion du bus de type processus léger 3.130 incluant l'ordonnanceur propriétaire de la tâche utilisateur 3.131.

Le processus 3.2 contient un processus léger 3.21 et un module de gestion du bus de type processus 3.20. Le processus léger 3.21 contient une tâche utilisateur 3.211 et une tâche système, à savoir un module de communication de type interprocessus 3.218 ainsi qu'un module de gestion du bus de type processus léger 3.210 incluant l'ordonnanceur propriétaire de toutes les tâches du seul processus léger 3.21, en l'occurrence la tâche utilisateur 3.211 et le module de communication 3.218.

Le processus 3.3 contient deux processus légers 3.31 et 3.32 et un module de gestion du bus de type processus 3.30. Le processus léger 3.31 contient une tâche utilisateur 3.311 et une tâche système, à savoir le module de communication de type interprocessus 3.318, ainsi qu'un module de gestion du bus de type processus léger 3.310 incluant l'ordonnanceur propriétaire de toutes les tâches du processus léger 3.31, en l'occurrence ici la tâche 3.311 et le module de communication 3.318. Quant au processus 3.32, il comprend deux tâches utilisateur 3.321 et 3.322 ainsi qu'un module de gestion du bus de type processus léger 3.320 incluant l'ordonnanceur propriétaire de toutes les tâches du processus léger 3.32, en l'occurrence les tâches 3.321 et 3.322.

On constate que l'architecture d'ordonnancement est hiérarchique et comporte ainsi, au sein d'un même processus, un ou plusieurs processus légers incluant lui-même une ou plusieurs tâches. De plus, l'ordonnancement des processus et des processus légers sera considéré comme préemptif et réalisé par le système d'exploitation 3.0 du dispositif de traitement d'information. Quant à l'ordonnancement des tâches au sein d'un processus léger, il sera considéré comme préemptif ou non et réalisé par un ordonnanceur propriétaire, c'est-à-dire dépendant dudit processus léger.

On notera qu'à un autre moment, cette configuration pourra avoir évoluer du fait, par exemple, qu'une tâche, un processus léger, voire un processus a terminé son exécution, ou encore qu'une tâche s'est déplacé, dans un mode dit nomade, d'un processus léger vers un autre processus léger, du même processus ou d'un processus différent.

Chaque module de gestion du bus de type processus léger comprend une FIFO protégée ainsi que des FIFOs qui sont respectivement dédiées aux tâches utilisateur du processus léger correspondant. La fonction de ces FIFOs est explicitée ci-dessous. Ces FIFOs ne sont pas représentés à la Fig. 8 pour ne pas alourdir cette figure.

Chaque module de gestion du bus de type processus 3.10, 3.20 et 3.30 contient en outre une table de routage 3.101, 3.201, 3.301 dans laquelle sont stockées, pour chaque tâche, son nom et sa référence à la FIFO dans le module de gestion du bus de type processus léger correspondant.

Chaque tâche a la possibilité d'émettre et recevoir des messages de commande, d'émettre et recevoir des réponses à des messages de commande et d'émettre et recevoir des notifications et d'émettre et recevoir des réponses sur notification.

Pour émettre un message de commande, une tâche appelle une méthode typée unique pour ce type de message acceptant en paramètres la référence de la tâche concernée fournie lors de son enregistrement au sein dudit bus concerné, le nom du bus et celui de la tâche concernés (<nom_bus_distant>/<nom_tâche_distante>), éventuellement si la tâche désire une réponse, une référence et une fonction *callback* prototypée par le bus pour ce type de réponse, ainsi que les paramètres nécessaires à l'exécution de la commande.

Pour recevoir un message de commande, une tâche positionne, au moyen d'une méthode exposée par ledit bus pour ce type de réception de commande, une fonction déclenchée par événement (dites en anglais *callback*) prototypée par ledit bus ainsi qu'une référence utilisée pour le déclenchement de cette fonction.

Pour émettre une notification, une tâche appelle une méthode typée unique pour le type de notification acceptant en paramètres la référence de la tâche concernée qui est fournie lors de son enregistrement au sein dudit bus, éventuellement si la tâche désire une réponse, une référence et une fonction *callback* prototypée par le bus pour ce type de réponse, ainsi que les paramètres nécessaires à la notification.

Enfin, pour recevoir une notification, une tâche positionne le nom du bus concerné et le nom de la tâche concernée <nom_bus_distant>/<nom_tâche_distante>, une fonction déclenchée par événement (*callback*) prototypée par ledit bus et une référence pour le déclenchement de ladite fonction.

Pour émettre un message de réponse à un message de commande ou à une notification, un module de gestion de bus appelle une méthode typée unique pour ce type de réponse acceptant en paramètres la référence du message fournie par l'appel à la fonction *callback* pré-assignée à la réception dudit message et les paramètres nécessaires à ladite fonction.

Les différentes tâches, les différents processus légers et processus représentés à la Fig. 1 appartiennent à une même entité logique, appelée bus logiciel qui est nommé, à titre d'exemple « bus_1 ».

L'invention utilise une architecture hiérarchique maître/esclave uniquement pour la fonction routage. Ainsi, au sein d'un dispositif de traitement d'information, un processus est initialisé en mode maître et les autres processus du même dispositif sont initialisés en mode esclave. Dans l'exemple de configuration représentée, au sein du dispositif de traitement d'information 1, le processus 3.1 est ainsi initialisé en mode maître et les processus 3.2 et 3.3 sont initialisés en mode esclave.

On notera que plusieurs bus de noms différents incluant un processus maître et des processus esclaves peuvent coexister sur un même dispositif de traitement d'information.

Le processus maître 3.1 possède un module de communication de type interprocessus 3.118 du processus maître 3.1 qui est en mode écoute sur une socket Unix nommée «/var/run/bus_1/Master» et les modules de communication de type interprocessus 3.218 et 3.318 sont en mode connexion vers la socket Unix du processus maître 3.1.

On notera qu'en général, les noms des bus des processus maître et esclaves sont identiques sur un même dispositif de traitement d'information mais rien n'empêche le contraire.

Après connexion entre processus esclaves et processus maître et identification et authentification avec liste d'accès, les processus esclaves 3.2 et 3.3 possèdent des connexions vers le processus maître respectivement sur les ports 3.118_12 et 3.118_13. Chaque connexion des processus est reconnue comme une connexion vers le nom de bus considéré, en l'occurrence le bus « bus_1 ».

Pour le processus de routage des messages entre tâches, l'invention utilise une architecture hiérarchique centralisée alors que pour l'échange des messages entre tâches, elle utilise une architecture distribuée. Pour illustrer ces deux caractéristiques, on donne ci-dessous des exemples de mise en œuvre d'échanges de messages transmis entre tâches.

Considérons ainsi qu'au sein du dispositif de traitement d'information 1 et d'un même processus, qu'il soit maître ou esclave, une tâche désire envoyer un message à une autre tâche faisant partie du même processus léger qu'elle. Par exemple, la tâche nommée 3.321 désire envoyer un message donné à la tâche nommée 3.322 faisant partie du même processus léger 3.32. Le module de gestion du bus de type processus léger 3.320 prend en charge le message en question et demande au module de gestion du bus de type processus 3.30 la route que doit suivre le message. Pourvu de sa table de routage 3.301, le module de gestion du bus de type processus 3.30 lui répond avec la référence de la FIFO non protégée dédiée à la tâche 3.322 hébergée par le même module de gestion du bus de type processus léger 3.320. Ledit module de gestion du bus de type processus léger 3.320 poste alors ledit message dans ladite FIFO et déclenche une demande d'ordonnancement de cette tâche destinataire 3.322. Une fois cette tâche ordonnancée, le message est extrait de la FIFO et est pris en compte par la tâche 3.322 par appel de sa fonction déclenchée par événement (*callback*) avec les paramètres contenus dans le message.

Considérons maintenant, une tâche qui, au sein du dispositif de traitement d'information 1, désire envoyer un message à une tâche faisant partie d'un autre processus léger mais toujours du même processus. Par exemple, la tâche nommée 3.321 désire envoyer un message donné à la tâche nommée 3.311 faisant partie d'un autre processus léger 3.31 mais du même processus 3.3. Le module de gestion du bus de type processus léger 3.320 prend en charge le message en question et demande au module de gestion du bus de type processus 3.30 la route à suivre. Celui-ci lui répond avec la référence de la FIFO protégée du module de gestion du bus de type processus léger 3.310. Ledit module gestion du bus de type processus léger 3.320 poste alors le message dans ladite FIFO protégée du module de gestion du bus de type processus léger 3.310 et, par un moyen mis à disposition par le système d'exploitation 3.0, effectue une demande d'ordonnancement du module de gestion contenant ladite FIFO, à savoir le module de gestion 3.310. Une fois le module de gestion 3.310 ordonnancé, le module de gestion du bus de type processus léger 3.310 extrait le message de la FIFO protégée puis, à l'instar du cas précédent, effectue une demande de routage auprès du module de gestion du bus de type processus 3.30 et obtient de celui-ci une référence d'une FIFO non protégée pour la réception du message par la tâche destinataire 3.311. Le module de gestion du bus de type processus léger 3.310 poste alors le message dans cette FIFO et effectue une demande d'ordonnancement de cette tâche destinataire 3.311. Une fois la tâche ordonnancée, le message est extrait de la FIFO et est pris en compte par la tâche 3.311 par appel de sa fonction déclenchée par événement (*callback*) avec les paramètres contenus dans le message.

On notera que si une FIFO n'est pas vide au moment où un message y est posté, c'est que le ou les messages qu'elle contient n'est pas encore extrait. Mais, cela signifie aussi que le réveil du processus léger correspondant a déjà été commandé. On pourra donc n'effectuer le réveil du processus léger en question que dans le cas où la FIFO est vide.

On notera également que le processus de routage est systématiquement effectué afin de satisfaire le coté nomade des tâches utilisateurs. En effet, même si la tâche destinataire a migré avant l'extraction du message de la FIFO protégée, le processus de routage permet le re-routage nécessaire.

Considérons maintenant qu'au sein du dispositif de traitement d'information 1, une tâche sur un processus léger d'un processus esclave désire envoyer un message à une autre tâche hébergée sur un processus léger du processus maître. Par exemple, la tâche 3.321 désire envoyer un message donné à la tâche nommée 3.121 hébergée sur le processus léger 3.12 du processus 3.1. Le module de gestion du bus de type processus léger 3.320 prend en charge le message et demande au module de gestion du bus de type processus 3.30 la route à suivre pour ce message. Le module de gestion 3.30 lui répond cette fois-ci que la tâche destinataire 3.121 lui est inconnue. Il stocke le message à transmettre et émet un message de type "recherche de tâche distante" (comme émanant de la tâche locale 3.321) en empruntant la connexion de signalisation 3.318_13. Le module de communication 3.118 du processus 3.1 du processus léger 3.11 reçoit, sur sa connexion 3.118_33, le message de type "recherche de tâche distante" et informe le module de gestion du bus de type processus 3.10 qui alors regarde dans sa table de routage 3.101.

Dans la table de routage 3.101 du module de gestion 3.10, la tâche 3.121 destinataire est connue comme résidant sur le processus léger 3.12. Selon l'invention, le module de gestion du bus de type processus 3.10 crée une tâche relais distante R3.321 avec les caractéristiques extraites du message de recherche sur le même processus léger que le module de communication qui a reçu ce message de recherche (en l'occurrence, le processus léger 3.11) et envoie au module de gestion 3.30 via la connexion de réception du message de recherche, à savoir la connexion 3.118_33, en réponse audit message de recherche, un message de type "ajout tâche relais" (comme émanant de la tache 3.121) avec les caractéristiques nécessaires à la création d'une tâche relais. Le module de communication 3.318 du processus 3.3 du processus léger 3.31 reçoit sur sa connexion 3.318_31 le message de type "ajout de tâche distante" et informe le module de gestion du bus de type processus 3.30. Celui-ci crée la tâche relais R3.121 avec les caractéristiques extraites du message sur le même processus léger que le module de communication qui a reçu le message de type ajout (en l'occurrence le processus léger 3.31) et enrichit sa table de routage de cette nouvelle tâche. S'ensuit une recherche des messages en attente de routage correspondant à ce nom. Les messages correspondants sont stockés dans la FIFO non protégée dédiée à la tâche destinataire R3.121.

Le module de gestion du bus de type processus léger 3.310 effectue une demande d'ordonnancement de cette tâche relais R3.121. Une fois cette tâche ordonnancée, le module de gestion du bus de type processus léger 3.310 sérialise le message dans la connexion 3.318_31 du dispositif de communication 3.318. La connexion 3.118_33 gérée par le module de gestion du bus de processus léger 3.110 reçoit et désérialise le message. Le module de gestion 3.110 effectue alors toutes les opérations déjà décrites pour poster le message dans la FIFO dédiée de la tâche 3.121 et si cette FIFO est vide pour effectuer une demande d'ordonnancement. Une fois la tâche 3.121 ordonnancée, le message est extrait de la FIFO et est pris en compte par la tâche 3.121 par appel de sa fonction déclenchée par événement (*callback*) avec les paramètres contenus dans le message.

Comme on le comprendra, la tâche 3.321 pourra communiquer avec la tâche 3.121 par l'intermédiaire des tâches relais R3.121 du processus léger 3.31 et R3.321 du processus léger 3.11.

Considérons encore qu'au sein du dispositif de traitement d'information 1, une tâche d'un processus esclave désire envoyer un message de donné à une autre tâche qui est maintenant hébergée sur un processus léger d'un autre processus esclave. Par exemple, la tâche 3.321 désire envoyer un message donné à la tâche nommée 3.211 hébergée par le processus 3.2 sur le processus léger 3.21. Le module de gestion du bus de type processus léger 3.320 prend en charge le message et demande au module de gestion du bus de type processus 3.30 la route à suivre pour le message. Celui-ci lui répond que la tâche destinataire lui est inconnue. Il stocke le message et émet un message de type "recherche de tâche distante" (comme émanant de la tâche 3.321) en empruntant le module de communication de type interprocessus 3.318. Le module de communication 3.118 du processus maître 3.1 et du processus léger 3.11 reçoit le message de type "recherche de tâche distante" sur sa connexion de type signalisation 3.118_33 et informe le module de gestion du bus de type processus 3.10 qui regarde dans sa table de routage 3.101.

Dans celle-ci, la tâche destinataire 3.211, puisqu'elle n'est pas hébergée par le processus maître 3.1, n'est pas connue. Le module de gestion du bus de type processus 3.10 diffuse ce message de recherche dans toutes les connexions qui sont établies en portant le nom du bus considéré, « bus_1 », autre que celle qui a vu transiter ledit premier message de recherche, c'est-à-dire dans les connexions portant le nom « bus_1 » du module de communication 3.119 et 3.118_32. Suite à la réception, sur sa connexion, de ce message de type "recherche de tâche distante", chaque module de communication informe le module de gestion du bus de type processus dont il dépend, lequel regarde dans sa table de routage de la présence ou pas de la tâche destinataire recherchée.

Seul le module de communication 3.218 du processus 3.2 du processus léger 3.21 a dans sa table de routage 3.201 la tâche considérée 3.211 résidant sur le même processus et sur le même processus léger que lui et en avertit le module de gestion du bus du type processus 3.20, lequel crée, sur le même processus léger 3.21 que le module de communication 3.218 qui a reçu le message de recherche, une tâche relais R3.321 avec les caractéristiques extraites du message de recherche, enrichit sa table de routage, effectue une recherche de message en attente de routage, comme déjà expliqué ci-dessus et transmet un message de type "ajout de tâche relais distante" (comme émanant de la tâche 3.211) avec comme paramètres de connexion le nom de la socket Unix nommée « /var/run/bus_1/Slave_3.2 ». Le module de communication 3.118 du processus 3.1 du processus léger 3.11 reçoit le message de type "ajout de tâche relais distante" sur sa connexion 3.118_32 et propage celui-ci vers la connexion 3.118_33 d'où venait la demande de recherche première. Le module de communication 3.318 du processus 3.3 du processus léger 3.31 reçoit à son tour le message de type "ajout de tâche relais distante" sur sa connexion 3.318_31 et en informe le module de gestion du bus de type processus 3.30.

Celui-ci crée alors, sur le même processus léger 3.31 qui héberge le module de communication 3.318 qui a reçu le message de type "ajout de tâche relais distante" 3.318, la tâche relais R3.211 avec les caractéristique extraites du message de recherche, puis enrichit sa table de routage 3.301 de ladite tâche relais R3.211. Par ailleurs, il initialise une demande de connexion avec les informations contenues dans ledit message de type "ajout de tâche relais distante", puis sur acceptation de la connexion une phase de d'identification et d'authentification avec liste d'accès. S'ensuit une recherche des messages en attente de routage correspondant à ce nom. Les messages correspondants sont stockés dans la FIFO non protégée dédiée à la tâche destinataire R3.211.

Le module de gestion du bus de type processus léger 3.310 effectue une demande d'ordonnancement de cette tâche relais R3.211. La tâche relais R3.211 ordonnancée, le module de gestion du bus de type processus léger 3.310 sérialise le message dans la connexion 3.318_32 contenue dans le module de communication 3.318. La connexion 3.218_33 gérée par le module de gestion du bus de processus léger 3.210 reçoit et désérialise le message.

Le module de gestion 3.210 effectue alors toutes les opérations déjà décrites pour poster le message dans la FIFO dédiée de la tâche 3.211 et, si cette FIFO est vide, pour effectuer une demande d'ordonnancement. Une fois la tâche 3.211 ordonnancée, le message est extrait de la FIFO et est pris en compte par la tâche 3.211 par appel de sa fonction déclenchée par événement (*callback*) avec les paramètres contenus dans le message.

On peut étendre ce dernier mode de fonctionnement à l'échange de messages entre dispositif de traitement d'information, le message de type ajout de tâche distante arrivera alors par le module de communication inter-dispositif 3.119 avec les informations d'une socket inet du type addresses ip:port. Dans ce cas, une phase de sérialisation/désérialisation est nécessaire.

En mode nomade, le fonctionnement d'un bus selon l'invention est le suivant.

Considérons qu'au sein du dispositif de traitement d'information 1, la tâche nommée 3.321 se désenregistre du bus. Le module de gestion du bus de type processus léger correspondant 3.320 va libérer la ressource FIFO, la ressource de l'ordonnanceur et la ressource référence fournie lors de l'enregistrement. Il génère aussi un message élimination de tâche distante 3.321 à toutes les tâches locales de tous les processus légers du processus et à toutes les connexions de type signalisation du processus par l'intermédiaire du module de communication 3.318. La connexion 3.118_33 du dispositif de communication 3.118 reçoit ce message, il informe le module de gestion du bus de type processus 3.10 qui vérifie s'il possède des tâches relais distantes correspondantes. Si c'est le cas, il va les libérer. Si des messages étaient en attente d'acquittement, ceux-ci sont réinsérés dans la FIFO d'attente de processus de recherche de tâche distante, processus qui va donc se relancer. Le module de gestion du bus de type processus va également vérifier si des connexions de type data se retrouvent sans lien vers des tâches relais distantes. Si c'est le cas, il va libérer cette connexion et propager le message sur toutes ces connexions de signalisation autre que celle d'où vient le message soit 3.118_32 et 3.119. La connexion 3.128_31 du dispositif de communication 3.218 reçoit ce message, il informe le module de gestion du bus de type processus qui vérifie s'il possède des tâches relais distantes correspondantes. Si c'est le cas, il va les libérer. Si des messages étaient en attente d'acquittement, ceux-ci sont réinsérés dans la FIFO d'attente de processus de recherche de tâche distante, processus qui va donc se relancer. Le module de gestion du bus de type processus va également vérifié si des connexions de type data se retrouvent sans lien vers des tâches relais distantes. Si c'est le cas, il va libérer cette connexion.

Si, de plus, la tâche 3.321 est insérée au processus léger 3.21 du processus 3.2, la table de routage du module de gestion du bus de type processus 3.20 est enrichie par ce nom. Il s'ensuit une procédure de recherche des messages en attente correspondant à ce nom. De plus les messages de recherche correspondant à ce nom seront honorés.

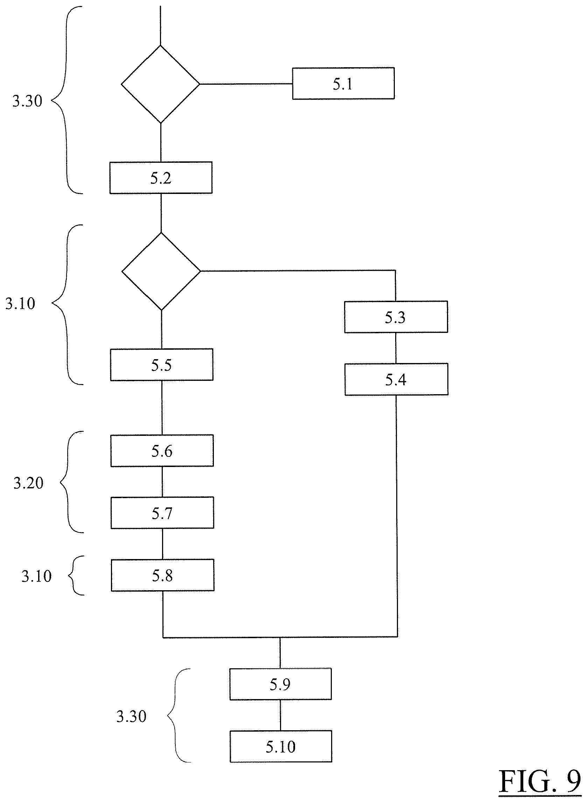

En résumé et en relation avec la Fig. 9, pour transmette un message d'une première tâche 3.321 à une seconde tâche, un procédé d'échange de messages selon l'invention comporte :
- les étapes suivantes mises en œuvre par le module 3.320 de gestion de bus du processus léger 3.32 hébergeant ladite première tâche 3.321:
   - lorsque ladite seconde tâche 3.322 ou 3.311 appartient au même processus 3.3 que ladite première tâche 3.321, une étape 5.1 de postage dudit message dans la FIFO dédiée à ladite seconde tâche 3.322 afin que celle-ci puisse le prendre en compte, sinon
   - une étape 5.2 de transmission audit module 3.10 de gestion de bus du processus maître 3.1 d'un message de recherche de la seconde tâche,
- les étapes suivantes mises en œuvre par le module 3.10 de gestion de bus du processus maître 3.1 :
   - lorsque ladite seconde tâche 3.121 est hébergée par un processus léger 3.12 dudit processus maître 3.1,
      - une étape 5.3 de création d'une tâche relais distante R3.321 au sein d'un processus léger 3.11 dudit processus maître 3.1,
      - une étape 5.4 de transmission d'une réponse audit module 3.320 de gestion de bus du processus léger 3.32 hébergeant la première tâche 3.321,
   - sinon,
      - une étape 5.5 de diffusion à chacun desdits modules de gestion de bus de type processus (en l'occurrence, le seul module 3.20 un message de recherche de la seconde tâche,
- les étapes suivantes mises en œuvre par le module 3.20 de gestion de bus d'un processus esclave 3.2 hébergeant la seconde tâche 3.211, à réception d'un message de recherche de la seconde tâche,
   - une étape 5.6 de création d'une tâche relais distante R3.321 au sein d'un processus léger 3.21 dudit processus esclave 3.2,
   - une étape 5.7 de transmission d'une réponse audit module 3.10 de gestion de bus du processus maître 3.1,
- l'étape 5.8 mise en outre en œuvre par le module 3.10 de gestion de bus du processus maître 3.1, suite à la réception de la réponse transmise par le module 3.20 de gestion de bus du processus esclave 3.2, de transmission d'une réponse audit module 3.30 de gestion de bus du processus léger 3.32 hébergeant la première tâche 3.321, et
- les étapes suivantes mises en œuvre par le module 3.30 de gestion de bus du processus léger 3.32 hébergeant ladite première tâche 3.321, lorsqu'il a reçu une réponse dudit module 3.10 de gestion de bus du processus maître 3.1 :
   - une étape 5.9 de création d'une tâche relais R3.211 correspondant à ladite tâche relais distante R3.321 au sein d'un processus léger 3.31 dudit processus 3.3 hébergeant ladite première tâche 3.321, et
   - une étape 5.10 de postage dudit message dans la FIFO dédiée à ladite tâche relais R3.211, laquelle le transmettra à la tâche relais distante R3.321, puis à la seconde tâche 3.211.

Ainsi, comme cela a été illustré ci-dessous, l'invention propose un système de communication entre tâches différentes appartenant à différents processus légers, eux-mêmes appartenant à des processus différents, lesdites tâches étant regroupées sous une même entité ou bus logiciel ou appartenant au contraire à des bus logiciels différents.

De manière générale, cette communication entre tâches utilise un mode client/serveur de type commande/réponse à base de messages 1 vers 1 ou 1 vers n et de type notification/réponse à base de message 1 vers n. Elle utilise un système de nommage des tâches clientes selon un format <nom de bus>/<nom de tâche>. Cette communication peut se faire directement tâche vers tâche ou indirectement par service interposé tel qu'un système de tâches producteur de commande vers service puis de service vers tâches de lecteur de notification. Cette communication intervient au sein d'un même dispositif de traitement mais peut également intervenir entre deux dispositifs de traitement de l'information. De plus, pour cette communication, la tâche peut être hébergée et/ou se déplacer sur tel ou tel dispositif de traitement d'information ou tel ou tel processus ou tel ou tel processus léger.

La communication repose sur le nom du bus et le nom de la tâche, sur une architecture hiérarchique d'ordonnancement, sur une architecture centralisée pour la fonction routage, sur une architecture distribuée pour l'échange de messages, sur des phases de découvertes et d'enregistrement/désenregistrement des différentes tâches sur un ou plusieurs noms de bus.

## Revendications

1. Procédé d'échange de messages entre tâches clientes d'un même bus exécutées par au moins un dispositif de traitement d'information comportant un système d'exploitation, lesdites tâches clientes d'un même bus étant exécutées au sein de différents processus légers eux-mêmes ordonnancés au sein de différents processus par ledit système d'exploitation, chaque processus contenant un module de gestion de bus de processus, et chaque processus léger contenant une FIFO pour chaque tâche que ledit processus léger contient ainsi qu'un module de gestion de bus de processus léger et un ordonnanceur propriétaire pour l'ordonnancement des tâches dudit processus léger, **caractérisé en ce qu'**il comporte :
- préalablement à tout échange de messages entre tâches, une étape d'initialisation au cours de laquelle un desdits processus est élu processus maître (3.1) alors que les autres processus sont considérés comme des processus esclaves (3.2,3.3), lesdits processus partageant une information indiquant quel processus a été élu processus maître, et **en ce que**, pour transmettre un message d'une première tâche (3.321) à une seconde tâche, il comporte :
- les étapes suivantes mises en œuvre par le module de gestion de bus (3.320) du processus léger (3.32) hébergeant ladite première tâche:
- lorsque ladite seconde tâche appartient au même processus léger (3.32) que ladite première tâche, une étape (5.1) de postage dudit message dans la FIFO dédiée à ladite seconde tâche afin que celle-ci puisse le prendre en compte, sinon
- une étape (5.2) de transmission audit module de gestion de bus du processus maître (3.10) d'un message de recherche de la seconde tâche,- les étapes suivantes mises en œuvre par le module de gestion de bus du processus maître:
- lorsque ladite seconde tâche est hébergée par un processus léger (3.12) dudit processus maître,
- une étape (5.3) de création d'une tâche relais distante (R3.321) au sein d'un processus léger dudit processus maître,
- une étape (5.4) de transmission d'une réponse audit module de gestion de bus du processus léger (3.320) hébergeant la première tâche,
- sinon,
- une étape (5.5) de diffusion à chacun desdits modules de gestion de bus (3.20,3.30) de processus esclave (3.2,3.3) d'un message de recherche de la seconde tâche,
- les étapes suivantes mises en œuvre par le module de gestion de bus d'un processus esclave (3.20) hébergeant la seconde tâche, à réception d'un message de recherche de la seconde tâche,
- une étape (5.6) de création d'une tâche relais distante (R3.321) au sein d'un processus léger dudit processus esclave,
- une étape (5.7) de transmission d'une réponse audit module de gestion de bus du processus maître (3.10)
- l'étape (5.8) mise en outre en œuvre par le module de gestion de bus du processus maître (3.10), suite à la réception de la réponse transmise par le module de gestion de bus du processus esclave (3.20), de transmission d'une réponse audit module de gestion de bus (3.320) du processus léger (3.32) hébergeant la première tâche, et
- les étapes suivantes mises en œuvre par le module de gestion de bus du processus léger (3.320) hébergeant ladite première tâche, lorsqu'il a reçu une réponse dudit module de gestion de bus du processus maître (3.10) :
- une étape (5.9) de création d'une tâche relais (R3.121) correspondant à ladite tâche relais distante au sein d'un processus léger (3.31) dudit processus hébergeant ladite première tâche, et
- une étape (5.10) de postage dudit message dans la FIFO dédiée à ladite tâche relais (R3.121) afin qu'elle puisse le prendre en compte.

2. Procédé d'échange de messages selon la revendication 1, **caractérisé en ce que** ladite étape d'initialisation comporte en outre les étapes suivantes:
- une étape (3.1) où les modules de gestion du bus des processus esclaves établissent un lien de connexion avec le module de gestion du bus du processus maître ;
- une étape (3.2) où chaque tâche cliente du bus s'enregistre auprès du module de gestion de bus de processus dont il dépend ;
- une étape (3.3) de création d'une FIFO associée à chaque tâche cliente du bus et à chaque module de gestion du bus de processus léger ;
- une étape (3.4) où le module de gestion du bus d'un processus esclave qui reçoit des enregistrements de modules logiciels clients du bus exporte ces enregistrements vers le module de gestion du bus du processus maître.

3. Procédé selon la revendication 2, **caractérisé en ce que** lesdites étapes d'initialisation comportent en outre une étape (3.5) de création au sein du processus maître d'autant de tâches relais qu'il y a de tâches clientes du bus au sein des processus esclaves.

4. Procédé selon l'une des revendications précédentes 2 ou 3, **caractérisé en ce que**, l'enregistrement des tâches clientes du bus auprès du module de gestion de bus comprenant une information dite mode de visibilité, le mode de visibilité pouvant prendre une première valeur dite privée ou une deuxième valeur dite publique, seules les tâches enregistrées avec un mode de visibilité dit public sont exportées vers le processus maître.

5. Procédé selon l'une des revendications 2 à 4, **caractérisé en ce qu'**il comporte en outre une étape de découverte entre une pluralité de dispositifs de traitement d'information participant au bus comprenant :
- une étape (4.1) d'annonce où chaque dispositif de traitement d'information participant au bus émet une annonce sur le réseau de communication reliant lesdits dispositifs de traitement d'information ;
- une étape (4.2) de réception d'un message d'annonce en provenance d'un dispositif de traitement d'information distante ;
- une étape (4.4) d'ajout du dispositif de traitement d'information à l'origine du message d'annonce reçu dans une table s'il n'est pas déjà connu ;
- une étape (4.5) d'établissement d'une connexion avec ce dispositif de traitement d'information distant.

6. Procédé selon une des revendications précédentes, **caractérisé en ce que** chaque module de gestion de bus de processus établit qu'une tâche appartient à un processus léger d'un processus au moyen d'une table de routage répertoriant les tâches et processus légers dudit processus dont elles dépendent.

7. Procédé selon une des revendications précédentes, **caractérisé en ce que** ledit processus maître comportant un module de gestion de bus hébergé par un processus léger dudit processus maître, ledit procédé comporte une étape de transmission d'un message entre une tâche relais dudit dispositif de traitement d'information et une tâche relais distante hébergée sur un autre dispositif de traitement d'information en utilisant ledit module de gestion de bus.

## Patentansprüche

1. Verfahren zum Austausch von Nachrichten zwischen Client-Tasks ein und desselben Busses, die von wenigstens einer Informationsverarbeitungsvorrichtung ausgeführt werden, die ein Betriebssystem aufweist, wobei die Client-Tasks ein und desselben Busses innerhalb verschiedener Threads ausgeführt werden, die ihrerseits durch das Betriebssystem innerhalb verschiedener Prozesse geplant werden, wobei jeder Prozess ein Prozessbus-Verwaltungsmodul enthält und jeder Thread ein FIFO für jede Task, welche der Thread enthält, sowie ein Thread-Bus-Verwaltungsmodul und einen proprietären Scheduler für die Planung der Tasks des Threads enthält, **dadurch gekennzeichnet, dass** es umfasst
- vor jedem Austausch von Nachrichten zwischen Tasks einen Schritt der Initialisierung, in welchem einer der Prozesse als Master-Prozess (3.1) gewählt wird, während die anderen Prozesse als Slave-Prozesse (3.2, 3.3) betrachtet werden, wobei die Prozesse eine Information teilen, die angibt, welcher Prozess als Master-Prozess gewählt worden ist, und
dadurch, dass es, um eine Nachricht von einer ersten Task (3.321) zu einer zweiten Task zu übertragen, umfasst:
- die folgenden Schritte, die von dem Bus-Verwaltungsmodul (3.320) des Threads (3.32) durchgeführt werden, der die erste Task hostet:
- wenn die zweite Task zu demselben Thread (3.32) wie die erste Task gehört, einen Schritt (5.1) des Einreihens der Nachricht in den FIFO, der für die zweite Task bestimmt ist, damit diese sie berücksichtigen kann, andernfalls
- einen Schritt (5.2) der Übertragung einer Suchnachricht bezüglich der zweiten Task an das Bus-Verwaltungsmodul des Master-Prozesses (3.10),
- die folgenden Schritte, die von dem Bus-Verwaltungsmodul des Master-Prozesses durchgeführt werden:
- wenn die zweite Task von einem Thread (3.12) des Master-Prozesses gehostet wird,
- einen Schritt (5.3) der Erzeugung einer entfernten Relais-Task (R3.321) innerhalb eines Threads des Master-Prozesses,
- einen Schritt (5.4) der Übertragung einer Antwort an das Bus-Verwaltungsmodul des Threads (3.320), der die erste Task hostet,
- andernfalls
- einen Schritt (5.5) des Rundsendens einer Suchnachricht bezüglich der zweiten Task an jedes der Bus-Verwaltungsmodule (3.20, 3.30) von Slave-Prozessen (3.2,3.3),
- die folgenden Schritte, die von dem Bus-Verwaltungsmodul eines Slave-Prozesses (3.20), der die zweite Task hostet, bei Empfang einer Suchnachricht bezüglich der zweiten Task durchgeführt werden:
- einen Schritt (5.6) der Erzeugung einer entfernten Relais-Task (R3.321) innerhalb eines Threads des Slave-Prozesses,
- einen Schritt (5.7) der Übertragung einer Antwort an das Bus-Verwaltungsmodul des Master-Prozesses (3.10),
- den Schritt (5.8), der außerdem von dem Bus-Verwaltungsmodul des Master-Prozesses (3.10) im Anschluss an den Empfang der von dem Bus-Verwaltungsmodul des Slave-Prozesses (3.20) übertragenen Antwort durchgeführt wird, der Übertragung einer Antwort an das Bus-Verwaltungsmodul (3.320) des Threads (3.32), der die erste Task hostet, und
- die folgenden Schritte, die von dem Bus-Verwaltungsmodul des Threads (3.320), der die erste Task hostet, durchgeführt werden, wenn es eine Antwort von dem Bus-Verwaltungsmodul des Master-Prozesses (3.10) empfangen hat:
- einen Schritt (5.9) der Erzeugung einer Relais-Task (R3.121), die der entfernten Relais-Task entspricht, innerhalb eines Threads (3.31) des Prozesses, der die erste Task hostet, und
- einen Schritt (5.10) des Einreihens der Nachricht in den FIFO, der für die Relais-Task (R3.121) bestimmt ist, damit diese sie berücksichtigen kann.

2. Verfahren zum Austausch von Nachrichten nach Anspruch 1, **dadurch gekennzeichnet, dass** der Schritt der Initialisierung außerdem die folgenden Schritte umfasst:
- einen Schritt (3.1), in dem die Verwaltungsmodule des Busses der Slave-Prozesse eine Verbindung mit dem Verwaltungsmodul des Busses des Master-Prozesses herstellen;
- einen Schritt (3.2), in dem sich jede Client-Task des Busses bei dem Prozessbus-Verwaltungsmodul anmeldet, von dem sie abhängt;
- einen Schritt (3.3) der Erzeugung eines zugeordneten FIFO für jede Client-Task des Busses und für jedes Verwaltungsmodul des Thread-Busses;
- einen Schritt (3.4), in dem das Verwaltungsmodul des Busses eines Slave-Prozesses, welches Anmeldungen von Client-Softwaremodulen des Busses empfängt, diese Anmeldungen zu dem Verwaltungsmodul des Busses des Master-Prozesses exportiert.

3. Verfahren nach Anspruch 2, **dadurch gekennzeichnet, dass** die Schritte der Initialisierung außerdem einen Schritt (3.5) der Erzeugung von ebenso vielen Relais-Tasks innerhalb des Master-Prozesses umfassen, wie Client-Tasks des Busses innerhalb der Slave-Prozesse vorhanden sind.

4. Verfahren nach einem der Ansprüche 2 oder 3, **dadurch gekennzeichnet, dass**, wenn die Anmeldung der Client-Tasks des Busses bei dem Bus-Verwaltungsmodul eine "Sichtbarkeitsmodus" genannte Information umfasst, wobei der Sichtbarkeitsmodus einen ersten Wert, "privat" genannt, oder einen zweiten Wert, "öffentlich" genannt, annehmen kann, nur die Tasks, die mit einem Sichtbarkeitsmodus "öffentlich" angemeldet werden, zum Master-Prozess exportiert werden.

5. Verfahren nach einem der Ansprüche 2 bis 4, **dadurch gekennzeichnet, dass** es außerdem einen Entdeckungsschritt zwischen mehreren Informationsverarbeitungsvorrichtungen, die an dem Bus beteiligt sind, aufweist, welcher umfasst:
- einen Schritt (4.1) der Ankündigung, in dem jede Informationsverarbeitungsvorrichtung, die an dem Bus beteiligt ist, eine Ankündigung über das Kommunikationsnetz aussendet, das die Informationsverarbeitungsvorrichtungen verbindet;
- einen Schritt (4.2) des Empfangs einer Ankündigungsnachricht von einer entfernten Informationsverarbeitung svorrichtung;
- einen Schritt (4.4) der Hinzufügung der Informationsverarbeitungsvorrichtung, von der die empfangene Ankündigungsnachricht stammt, zu einer Tabelle, falls sie nicht schon bekannt ist;
- einen Schritt (4.5) der Herstellung einer Verbindung mit dieser entfernten Informationsverarbeitung svorrichtung.

6. Verfahren nach einem der vorhergehenden Ansprüche, **dadurch gekennzeichnet, dass** jedes Prozessbus-Verwaltungsmodul feststellt, dass eine Task zu einem Thread eines Prozesses gehört, indem es eine Routingtabelle verwendet, in der die Tasks und Threads des Prozesses, von dem sie abhängen, verzeichnet sind.

7. Verfahren nach einem der vorhergehenden Ansprüche, **dadurch gekennzeichnet, dass**, wenn der Master-Prozess ein Bus-Verwaltungsmodul aufweist, das von einem Thread des Master-Prozesses gehostet wird, das Verfahren einen Schritt der Übertragung einer Nachricht zwischen einer Relais-Task der Informationsverarbeitungsvorrichtung und einer entfernten Relais-Task, die auf einer anderen Informationsverarbeitungsvorrichtung gehostet wird, unter Verwendung des Bus-Verwaltungsmoduls umfasst.

## Claims

1. Method for exchanging messages between client tasks of the same bus that are executed by at least one information-processing device which includes an operating system, said client tasks of the same bus being executed within different threads that are themselves scheduled within different processes by said operating system, each process containing a process bus management module, and each thread containing one FIFO for each task contained in said thread and also a thread bus management module and a dedicated scheduler for scheduling the tasks of said thread, **characterized in that** it includes:
- prior to any exchange of messages between tasks, an initialization step during which one of said processes is chosen as the master process (3.1), while the other processes are considered to be slave processes (3.2, 3.3), said processes sharing an item of information indicating which process has been chosen as the master process, and
**in that**, in order to transmit a message from a first task (3.321) to a second task, it includes:
- the following steps implemented by the bus management module (3.320) of the thread (3.32) that hosts said first task:
- when said second task belongs to the same thread (3.32) as said first task, a step (5.1) of posting said message in the FIFO specific to said second task in order for it to be able to take said message into account, otherwise
- a step (5.2) of transmitting to said bus management module of the master process (3.10) a search message regarding searching for the second task,
- the following steps implemented by the bus management module of the master process:
- when said second task is hosted by a thread (3.12) of said master process,
- a step (5.3) of creating a remote relay task (R3.321) within a thread of said master process,
- a step (5.4) of transmitting a response to said bus management module of the thread (3.320) that hosts the first task,
- otherwise,
- a step (5.5) of delivering to each of said bus management modules (3.20, 3.30) of a slave process (3.2, 3.3) a search message regarding searching for the second task,
- the following steps implemented by the bus management module of a slave process (3.20) that hosts the second task, upon receiving a search message regarding searching for the second task:
- a step (5.6) of creating a remote relay task (R3.321) within a thread of said slave process,
- a step (5.7) of transmitting a response to said bus management module of the master process (3.10),
- the step (5.8), additionally implemented by the bus management module of the master process (3.10) after receiving the response transmitted by the bus management module of the slave process(3.20), of transmitting a response to said bus management module (3.320) of the thread (3.32) that hosts the first task, and
- the following steps implemented by the bus management module of the thread (3.320) that hosts said first task when said bus management module has received a response from said bus management module of the master process (3.10):
- a step (5.9) of creating a relay task (R3.121) that corresponds to said remote relay task within a thread (3.31) of said process that hosts said first task, and
- a step (5.10) of posting said message in the FIFO specific to said relay task (R3.121) in order for it to be able to take said message into account.

2. Method for exchanging messages according to Claim 1, **characterized in that** said initialization step further includes the following steps:
- a step (3.1) in which the management modules of the bus of the slave processes set up a connection link to the management module of the bus of the master process;
- a step (3.2) in which each client task of the bus is registered with the process bus management module responsible for said bus;
- a step (3.3) of creating a FIFO associated with each client task of the bus and with each management module of the thread bus;
- a step (3.4) in which the management module of the bus of a slave process which receives registrations of client software modules of the bus exports these registrations to the management module of the bus of the master process.

3. Method according to Claim 2, **characterized in that** said initialization steps further include a step (3.5) of creating as many relay tasks within the master process as there are client tasks of the bus within the slave processes.

4. Method according to either of the preceding Claims 2 and 3, **characterized in that**, the registration of the client tasks of the bus with the bus management module comprising an item of information called "visibility mode", the visibility mode being able to assume a first value, "private", or a second value, "public", only tasks registered with a "public" visibility mode are exported to the master process.

5. Method according to one of Claims 2 to 4, **characterized in that** it further includes a step of discovery between a plurality of information-processing devices sharing the bus, comprising:
- a notification step (4.1) in which each information-processing device sharing the bus sends out a notification on the communication network that connects said information-processing devices;
- a step (4.2) of receiving a notification message from a remote information-processing device;
- a step (4.4) of adding the information-processing device from which the received notification message has originated to a table, if said device is not already known;
- a step (4.5) of setting up a connection to this remote information-processing device.

6. Method according to one of the preceding claims, **characterized in that** each process bus management module establishes that a task belongs to a thread of a process by means of a routing table that lists the tasks and threads of said process responsible for said tasks.

7. Method according to one of the preceding claims, **characterized in that**, said master process including a bus management module hosted by a thread of said master process, said method includes a step of transmitting a message, using said bus management module, between a relay task of said information-processing device and a remote relay task hosted on another information-processing device.
